# EUROPEAN PATENT SPECIFICATION

(11) **EP 4 092 348 B1**
(45) Date of publication and mention of the grant of the patent: **20.11.2024**
(21) Application number: 22173575.6
(22) Date of filing: 16.05.2022
(51) Int. Cl.: F16L 9/00, F16L 11/00, F24F 13/02, F16L 23/04, F16L 23/14, F16L 41/03

(54) **AIR DISTRIBUTOR UNIT**
LUFTVERTEILEREINHEIT
UNITÉ DE DISTRIBUTION D'AIR

(30) Priority: 19.05.2021 CH 5612021
(43) Date of publication of application: 23.11.2022
(73) Proprietor: Zehnder Group International AG, 5722 Gränichen (CH)
(72) Inventor: Hiller, Andreas, 77972 Mahlberg (DE); Renke, Valerian, 77749 Hohberg (DE); Wind, Michael, 79364 Malterdingen (DE); Klink, Thomas, 79725 Laufenburg (DE); Hurn, Stephen, Sittingbourne Kent, ME10 1RB (GB); Fries, Marc, 67860 Rhinau (FR)
(74) Representative: Rentsch Partner AG

(56) References cited:
- EP-A1- 1 491 695
- EP-A1- 2 479 508
- EP-A2- 2 660 526
- WO-A1-2011/064198
- WO-A1-2017/182867
- AU-B2- 630 256
- CA-A1- 2 363 881
- KR-A- 20050 001 507
- KR-B1- 100 796 230
- US-A- 5 954 371

## Description

### Field of disclosure

The present invention relates to the technical field of air distribution in a ventilation system and particularly concerns an air distributor unit, a kit of parts including one or more of such units and an air distributor assembly.

### Background, prior art

Air distributor units are employed in ventilation systems for example for distributing incoming fresh air to various different rooms and/or for expelling exhaust air from the rooms to the outside of the building via different tubing being fluidic connected to the air distributor unit. During installation, the air distributor units can either be casted in concrete, for example in the floor of the corresponding building, or can be installed as in-wall installations. EP 2 660 526 A2 and US 5 954 371 A disclose ventilation apparatuses known in the prior art.

Known air distributor units are typically made of metal or of polymer material. Metal has the advantage of higher stability, while polymer material is lighter and easier during manufacture of the air distributor unit.

### Summary of disclosure

Many known air distributor assemblies have the disadvantage that they do not allow flexibility during installation. For example, many air distributor assemblies are available in fixed lengths, diameters and/or comprise a predetermined amount of connectors for connecting ventilation tubing. Due to the largely varying building requirements, it is however desirable to provide an air distributor assembly, which can be assembled in a rapid and flexible manner.

Furthermore, while many metal air distributor units or assemblies comprising one or more such units, have typically an increased stability, they have a high weight, which typically influences statics and negatively affects installation of the assembly.

Furthermore, while air distributor units made from polymeric material are known, their manufacture is typically difficult and/or cumbersome, because from a manufacturing point of view they usually have difficult geometries and parts, which are required for connecting different ventilation tubes, for connecting different units together to form an assembly and for ensuring fluid tightness of the unit or assembly.

It is therefore a general object of the present invention to advance the state of the art regarding air distributor units and assemblies and preferably to overcome one or more disadvantages mentioned above fully or partly. In favorable embodiments, an air distributor unit and a corresponding assembly is provided which shows an increased fluid tightness, is of lightweight, allows a more flexible and/or faster installation and/or is efficiently manufactured.

The general object is achieved by the subject-matter of the independent claims. Further favorable embodiments follow from the dependent claims and the disclosure as a whole.

A first aspect of the invention relates to an air distributor unit comprising a tubular base-body. The tubular base body has an outer side wall which encompasses an inner space of the air distributor unit. The tubular base body is made from a polymeric material and extends in a longitudinal direction of the air distributor unit between a first end and a second end of the air distributor unit. The air distributor unit, and in particular the tubular base body, comprises at the first end a first opening and at the second end a second opening. It is clear to the skilled person that the first end and the first opening is different from the second end and the second opening. The cross-sectional open area of the first opening, i.e. the open space defined by the first opening, and the cross-sectional open area of the second opening, i.e. the open space defined by the second opening, are each larger than the inner cross-sectional area, in particular the inner cross-sectional open area, of the outer side wall between the first end and the second end of the tubular base body, i.e. are each larger than the inner cross-sectional area of the outer side wall at any given position between the first end and the second end of the tubular base body. The inner cross-sectional area is the area of the planar surface defined by the outer side wall, i.e. excluding the wall thickness of the outer side wall, at any given position between the first end and the second end. The cross-sectional open areas and the inner cross sectional area are all typically parallel to each other and/or arranged essentially perpendicular to the longitudinal direction.

The outer side wall comprises only the wall encompassing the inner space, i.e. any additional elements, such as reinforcing columns, rods, and the like which may extend through the inner space, are not part of the outer side wall and therefore do not reduce the inner cross-sectional area of the outer side wall.

The first end and the second end are the outer most surfaces and/or positions of the air distributor unit along the longitudinal direction. The longitudinal direction may typically be the direction in a 3-dimensional coordinate system in which the air distributor unit has the largest extension and which may in particular run through the center of the inner space and/or through the center of the first opening and the center of the second opening.

In some embodiments, the first opening is configured for being connected with the second opening of another air distributor unit according to any of the embodiments as described herein. Vice versa, the second opening is configured for being connected with the first opening of another air distributor unit according to any of the embodiments as described herein.

In some embodiments, the first opening and the second opening are opposing each other. In particular, the first opening and the second opening are arranged diametrically opposite to each other.

The inner space is typically a compartment of the air distributor unit, which may be configured for accommodating air. The inner space particular extends between the first opening and the second opening. Air can be provided into the inner space via the first opening and/or the second opening, and/or via any lateral connector openings.

In some embodiments, the outer side wall comprises at least one lateral connector opening into the inner space. The lateral connector opening is typically configured for establishing a fluid connection between the inner space and a ventilation tube. It is understood that the lateral connector opening is different from, i.e. not identical to, the first and second opening. Thus, in an embodiment with one lateral connector opening, there are three different fluid connections to the inner space. In some embodiments, the outer side wall comprises a plurality of air connector openings of different types, e.g. of different diameters or different cross-sectional open areas. Lateral connector openings are openings which define a cross sectional open area being planar and being arranged parallel to the longitudinal direction.

In some embodiments, the outer side wall comprises 2, 3, 4, 5, 6, 7 or 8 lateral connector openings.

In some embodiments, the tubular base body has a polygonal shape, i.e. it may be a prism, in particular a cuboid or a hexagonal prism. In alternative embodiments, the tubular base body may be a cylinder.

In some embodiments, the outer side wall comprises an exchangeable wall section, which preferably comprises a lateral connector opening into the inner space. An exchangeable wall section is a wall section which can be released and reconnected to the outer side wall. For example, the exchangeable wall section may comprise a frame defining the lateral connector opening. Such embodiments have the advantage that ventilation tubes which are already connected to a corresponding wall section can rapidly be connected to the air ventilation unit. The removable wall section may for example be mounted to the outer wall by a form-locking structure, e.g. a snap-fit or latching connection. The term "exchangeable" means that the wall section can be exchanged without destroying the outer side wall, e.g. by cutting the outer side wall.

In some embodiments, the outer side wall comprises a plurality of wall planes encompassing the inner space and being angled towards each other. The wall planes are typically arranged directly adjacent to each other. For example, if the tubular body is a cuboid, the outer side wall comprises four wall planes, which are angled to each other and which are arranged directly adjacent, respectively next to each other.

In specific embodiments, the outer side wall comprises at least two or at least three lateral connector openings within different wall planes and/or within the same wall plane. For example, one wall plane may be a bottom wall or a top wall having a single lateral connector opening, while another wall plane may be a sideward wall being arranged essentially 90° to the bottom wall and/or the top wall, and which may have one or more lateral connector openings. In other embodiments, all lateral connector openings may be comprised in the sideward wall, while the top wall and the bottom wall are free of lateral connector openings. In some specific embodiments, the outer side wall comprises 2 or 3 lateral connector openings within the same wall plane.

The tubular base body is configured as a single-piece tubular base body. A single-piece tubular body has the advantage that the occurrence of leakage is avoided. Leakage is for example a problem if the base body is made of different parts, for example of two half-shells, which are in a separate step connected.

The tubular base body is injection-molded. In some embodiments, the air distributor unit may be injection-molded. As the cross-sectional open area of the first opening and the cross-sectional open area of the second opening are each larger than the inner cross-sectional area of the outer side wall of the tubular base-body between the first end and the second end of the base body, the tubular base body can be produced as a single-piece by injection molding, as deforming is enabled via the first and second opening, thereby the efficiency of manufacture is significantly increased.

The tubular base body comprises a first flange around the first opening and a second flange around the second opening. The first flange may be configured to be connected to a second flange of a corresponding additional tubular base body as described in any of the embodiments herein. Vice versa, the second flange may be configured to be connected to a first flange of a corresponding additional tubular base body as described in any of the embodiments herein. Such flanges allow to connect different air distributor units in a rapid and modular manner.

In some embodiments, the first flange and the second flange each comprise at least one folding edge defining a rear grip. The rear grip may in particular extend perpendicularly to the longitudinal direction. Furthermore, the folding edge can be configured for forming a male part of a form-locking connection when two air distributor units are adjacently connected with each other. Particularly each folding edge can be configured such that it forms one half of a male part of a form locking connection. Thus, when a two air distributor units are adjacently joined together, the corresponding two folding edges are configured such that they contact each other and form together the male part of a connection. Particularly, the connection may be a dovetail connection. In embodiments, in which the outer side wall comprises different wall planes encompassing the inner space and being angled towards each other, each rear grip may in particular extend partially or fully along one, or preferably along two, in particular two opposing, wall planes.

In some embodiments, the base body comprises at the first end and at the second end of its front sides protruding teeth and depressions each for accommodating a tooth. Typically, the depressions are configured such that they can accommodate the corresponding tooth of another air distributor unit according to any of the embodiments described herein, when the two air distributor units are adjacently connected with each other. In other words, the shape of each tooth corresponds to the shape of each depression. Such teeth and depressions allow for an easy and rapid assembly of multiple air distributor units to form an air distributor assembly comprising multiple of such air distributor units.

In some embodiments, the base body comprises on each of its front sides a groove being circumferentially arranged around the first opening or the second opening and being configured for accommodating a sealing lip. Together with a sealing lip, such grooves increase the fluid tightness of the air distributor unit.

In some embodiments, the air distributor unit further comprises a male connector structure being circumferentially, particularly radially, arranged around the first opening and a female connector structure being circumferentially, particularly radially, arranged around the second opening. The male and female connector structure correspond to each other, i.e. the male connector structure of a first air distributor unit is configured such that it can form a connection, in particular a form-locking connection, such as a plug connection, with corresponding female connector structure of another air distributor according to any of the embodiments as described herein. Such structures allow for a fast assembly of multiple air distributor units of any of the embodiments as described herein to form an air distributor assembly.

In some embodiments, the outer side wall comprises at least one fastening structure for fastening at least one supporting leg. The fastening structure may for example be configured for establishing a form-lock and/or force-lock connection with a supporting leg or a foot. For example, the fastening structure may comprise one or more threaded blind holes or a latch or the like.

In certain embodiments, the fastening structure is configured for establishing a snap-fit or latching connection with the at least one supporting leg or foot.

In specific embodiments, the fastening structure is configured such that the at least one supporting leg or foot can be fastened on a plurality of different levels. Thus, the legs or feet can be readily installed at a specifically required height. In particular, the fastening structure is configured such that the at least one supporting leg or foot can be, i.e. is, fastened on a plurality of different levels being distanced of each other in regular intervals.

In some embodiments, the air distributor unit further comprises a plurality of feet protruding from the base body. Preferably each of the feet is extendable. In such embodiments, an additional fastening structure as described above may be present or dispensed with. The feet may be integrally connected with the tubular base body, e.g. by molding them directly to the tubular base body, or they may be mounted to the tubular base body by form-locking and/or force-locking and/or material bonding means. The feet may be extendable such that the height of the tubular base body can be easily and rapidly adjusted. In some embodiments, a foot may be connected to a supporting leg, which in turn is connected to the air distributor unit.

In some embodiments, the outer side wall comprises a first inclination, in particular a first linear inclination, extending from the first opening towards a constriction, and a second inclination, in particular a second linear inclination, extending from the second opening towards the constriction. The first inclination increases from the first opening towards the constriction and the second inclination increases from the second opening towards the constriction. The constriction refers to the position of tubular base body along the longitudinal direction at which the inner cross sectional area of the outer side wall has the lowest, i.e. minimum, value. The constriction is further arranged between the first opening and the second opening. The first inclination and second inclination are each arranged on the inside of the outer side wall, respectively these are facing towards the inner space. Preferably, the distance along the longitudinal direction of the first opening to the constriction is equal than the distance along the longitudinal direction of the second opening to the constriction. The first and second inclination can circumferentially extend around the inner space. Thus, the inner space can in some embodiments have from the first opening to the constriction a frustopyramidal or a frustoconical shape and further from the second opening to the constriction a frustopyramidal or a frustoconical shape.

In some embodiments, the cross sectional area of the inner space decreases, particularly continuously decreases from the first opening to the constriction and also from the second opening to the constriction.

In some embodiments, the first linear inclination and the second linear inclination each comprises an inclination angle with respect to the longitudinal direction of 0.5° to 6°, in particular from 1°to 5°.

In some embodiments, the ratio between the cross sectional open area of the first opening, and/or of the second opening, to the inner cross sectional area of the outside wall at the constriction is between 1: 0.90 to 1 :0.99, in particular between 1 :0.93 to 1 :0.98.

In some embodiments, the cross sectional open area of the first opening, and of the second opening each are between 200 cm² to 300 cm², in particular between 230 cm² to 260 cm²
In some embodiments, the total length, i.e. the total extension along the longitudinal direction, of the air distributor unit is between 200 mm and 600 mm, in particular between 400 mm and 500 mm.

In some embodiments, the polymeric material is an organic polymer. In particular, the polymeric material can be selected from polyethylene, particularly HDPE, polyurethane, polystyrene, polyamide, and the like. In particular embodiments, the polymeric material is an expanded, i.e. foamed, polymer.

In some embodiments, the cross sectional open area of the first opening and the second opening are of equal size.

In some embodiments, the cross sectional open area of the first opening and the second opening each are larger than the cross sectional open area of any lateral connector opening.

In some embodiments, the cross sectional open area of the first opening and the second opening each are between 50 cm² to 1000 cm², particularly between 150 cm² to 500 cm², particularly between 150 cm² to 300 cm².

In some embodiments, the outer side wall has a wall thickness of at least 3 mm, in particular of between 3 mm to 10 mm, particularly of 4 mm to 8 mm. Such a thickness is sufficient to both provide a relatively low overall weight and further provide sufficient stability that no breaks occur when the air distributor unit is casted into concrete.

In some embodiments, the inner space encompassed by the outer side wall is completely hollow, i.e. the total space available for being filled with fluid is only defined by the outer side wall, thereby avoiding any turbulence causing structural elements.

In some embodiments, the inner space is defined by one or more planar inside walls of the outer side wall.

In a second aspect, the invention concerns a kit of parts comprising at least two air distributor units according to any of the embodiments as described in the first aspect above. It is understood that the at least two air distributor units do not have to be according to the same embodiment. The kit further comprises one or more sealing lips configured for providing a sealing connection, in particular a fluid tight seal, between two adjacently connected air distributor units, and optionally a plurality of connecting elements. The sealing lips are typically configured such that they can be circumferentially arranged around the first opening and/or the second opening.

In some embodiments, the connecting elements are configured for connecting two adjacent air distributor units via a form-locking connection. Furthermore, the connecting elements may be configured to be slided over at least a part of each of the two adjacently arranged air distributor units. For example, the connecting elements may be slided over the rear grips of the first flange of one of the air distributor units and over the rear grips of the second flange of another one of the air distributor units.

The connecting elements may also be made from a polymeric material.

In some embodiments, the kit further comprises a plurality of supporting legs and/or feet, which may in certain embodiments be configured to be fastened to the at least one fastening structure of at least one of the air distributor units. In some embodiments the supporting legs may be adjustable, in particular with respect to their length. Preferably, the legs may be adjusted between 30 to 50 mm. In particular, in the least extended configuration, the legs protrude between 30 to 40 mm from the base body and between 60 to 90 mm from the base body in the most extended configuration.

In some embodiments, the kit further comprises a first end cap with a connector opening and a second end cap with a connector opening. The first end cap is configured for being connected with the first end of one of the air distributor units and the second end caps is configured for being connected with the second end of another one of the air distributor units. In particular, as it is the case for the air distributor units, also the first end cap and the second end cap may each comprise a flange, particularly with a folding edge, which preferably forms a rear grip as mentioned above. Thus, the connecting elements may also be used to adjacently connect the first end cap with the first end of one of the air distributor units, in particular by form-locking. Preferably, the first end cap and the second end cap each are tapered, i.e. funnel shaped. Such end caps have the advantage that the kit can be used for assembling an air distributor assembly as described below in the third aspect of the invention, which has on each of its two front sides along the longitudinal direction an additional longitudinal connector opening for example for connecting a tube of a ventilation system.

In a third aspect, the invention concerns an air distributor assembly comprising at least two adjacently connected air distributor units according to any of the embodiments as described in the first aspect above. It is understood that the at least two air distributor units do not have to be according to the same embodiment, although this may be the case for some embodiments. The first opening of one of the air distributor units is connected with the second opening of the other air distributor unit. Furthermore, a sealing lip is arranged between the two connected air distributor units. By connecting the two air distributor units, the inner space of each of the two units form together a combined inner space. The sealing lip radially circumferentially extends around the combined inner space.

In some embodiments, the two air distributor units are connected by at least one connecting element, preferably via a form-locking connection.

Furthermore, the connecting elements may be slided over at least a part of each of the two adjacently arranged air distributor units. For example, the connecting elements may be slided over the rear grips of the first flange of one of the air distributor units and over the rear grips of the second flange of another one of the air distributor units.

The connecting elements may also be made from a polymeric material.

In some embodiments, supporting legs or feet may be fastened to the at least one fastening structure of at least one or of all of the air distributor units. In some embodiments the supporting legs may be adjustable, in particular with respect to their length.

In some embodiments air distributor assembly further comprises a first end cap with a connector opening and a second end cap with a connector opening. The first end cap is connected with the first end of one of the air distributor units and the second end caps is configured for being connected with the second end of another one of the air distributor units. All air distributor units are arranged along the longitudinal direction between the first end cap and the second end cap. In particular, as it is the case for the air distributor units, also the first end cap and the second end cap may each comprise a flange, particularly with a folding edge, which preferably forms a rear grip as mentioned above. Thus, one connecting element may adjacently connect the first end cap with the first end of its directly adjacent air distributor unit, in particular by form-locking and vice versa, one connecting element may adjacently connect the second end cap with the second end of its directly adjacent air distributor unit, in particular by form-locking. Preferably, the first end cap and the second end cap each are tapered, i.e. funnel shaped, along the longitudinal direction.

### Brief description of the figures

The herein described invention will be more fully understood from the detailed description given herein below and the accompanying drawings which should not be considered limiting to the invention described in the appended claims. The drawings are showing:
- Fig. 1:: a perspective view of an air distributor unit according to an embodiment of the invention;
- Fig. 2:: a cross-sectional view along the longitudinal direction of the air distributor unit of Fig. 1;
- Fig. 3:: an exploded view of an air distributor assembly according to an embodiment of the invention;
- Fig. 4:: a perspective view of an air distributor assembly according to an embodiment of the invention;
- Fig. 5:: a bottom view on the air distributor assembly of Fig. 4;
- Fig. 6:: an enlarged view of section A in Fig. 5.

### Exemplary embodiments

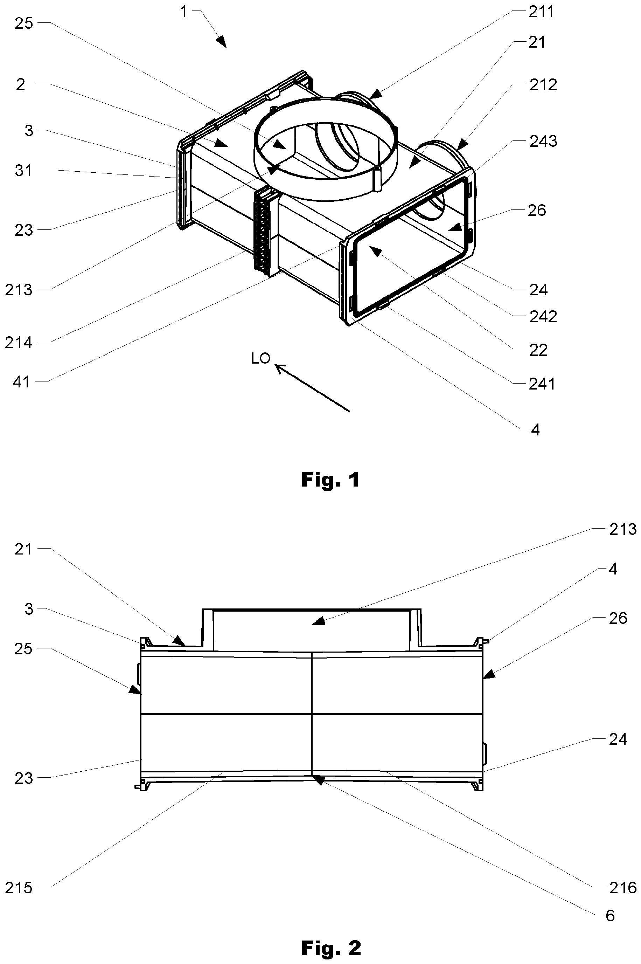

Fig. 1 shows an air distributor unit 1 comprising a tubular base-body 2 made from a polymeric material, which comprises outer side wall 21 encompassing inner space 22. As can be seen, outer side wall 21 circumferentially encompasses inner space 22 along the longitudinal direction LO. Tubular base body 2 extends between first end 23 and second end 24 of air distributor unit 1. The air distributor unit, particularly base body 2 comprises at the first end 23 first opening 25 and at second end 24, second opening 26. Both the first opening and the second opening open into inner space 22 and are arranged along the longitudinal direction LO such that they are diametrically opposite to each other. Outer side wall 21 comprises in the embodiment shown, three lateral connector openings 211, 212 and 213, which each provide a fluidic connection to inner space 22. In the embodiment shown, tubular base body 2 is a cuboid base body. i.e. outer side wall 21 consists of four different wall planes, which are arranged adjacent to one another, i.e. every wall plane is directly in contact with to other wall planes. The wall planes each are angled to each other in an angle of essentially 90°. As can be seen, lateral connector opening 213 is comprised in the top wall plane, while lateral connector openings 211 and 212 are comprised within the same sideward plane. Tubular base body 2 further comprises first flange 3 extending radially around first opening 25 and being arranged at first end 23 and additionally second flange 4 extending radially around second opening 26 and being arranged at second end 24. Both the first flange 3 and the second flange 4 comprise at least one folding edge 31 and 41, which each form a rear grip. The rear grip extends in the embodiment shown perpendicularly to the longitudinal direction LO, i.e. along the corresponding sideward wall plane, which is perpendicular to the top wall plane and the bottom wall plane. At first end 23 and at second end 24 the base body comprises at its front sides protruding teeth 241 (for clarity purposes, only a single tooth is referenced) and corresponding depressions 242. In this or in any other embodiment described herein, the teeth may particularly protrude from the first flange, respectively, the second flange. In this or in any other embodiment described herein, the teeth and depressions may also be comprised in the first flange 3, respectively in the second flange 4. A corresponding depression means that a tooth of a first air distributor unit can be accommodated in a depression of a second, i.e. different, air distributor unit, or could hypothetically be accommodated by the depression in the first air distributor unit. On its two front sides, respectively at the first end and at the second end, base body 2 further comprises groove 243 being circumferentially and/or radially arranged around second opening 26 and being configured for accommodating a sealing lip (the corresponding groove around the first opening is not visible in this perspective view). Outer side wall 21 further comprises fastening structure 214, which in the embodiment shown is configured for establishing a force-lock connection by means of threaded blind holes with a supporting leg or a foot. The blind holes are arranged at different levels in regular intervals, thereby allowing to mount the supporting leg at different levels.

Fig. 2 shows a cross sectional view along the longitudinal direction of the embodiment shown in Fig. 1. As can be seen, the cross-sectional open area of the first opening 25, i.e. the open space defined by the first opening 25, and also the cross-sectional open area of the second opening 26, i.e. the open space defined by the second opening 26, are each larger than the inner cross-sectional area, in particular the inner cross-sectional open area, of the outer side wall at any given position between the first end 23, respectively the first opening 25 and the second end 24, respectively the second opening 26, of the tubular base body 2. Outer side wall 21 comprises in the embodiment shown, in the cross-section along the longitudinal direction first inclination 215 extending from the first opening 25, respectively from the first end 23, to constriction 6, at which the inner cross sectional area of the outer side wall 21 has the lowest, i.e. minimum, value. Furthermore, outer side wall 21 comprises in the cross-section along the longitudinal direction second inclination 216 extending from the second opening 26, respectively from the second end 24, to constriction 6. The inner space between the first opening 25 and constriction 6 comprises thus a frustopyramidal shape. Similarly, the inner space between the second opening 26 and constriction 6 comprises also a frustopyramidal shape.

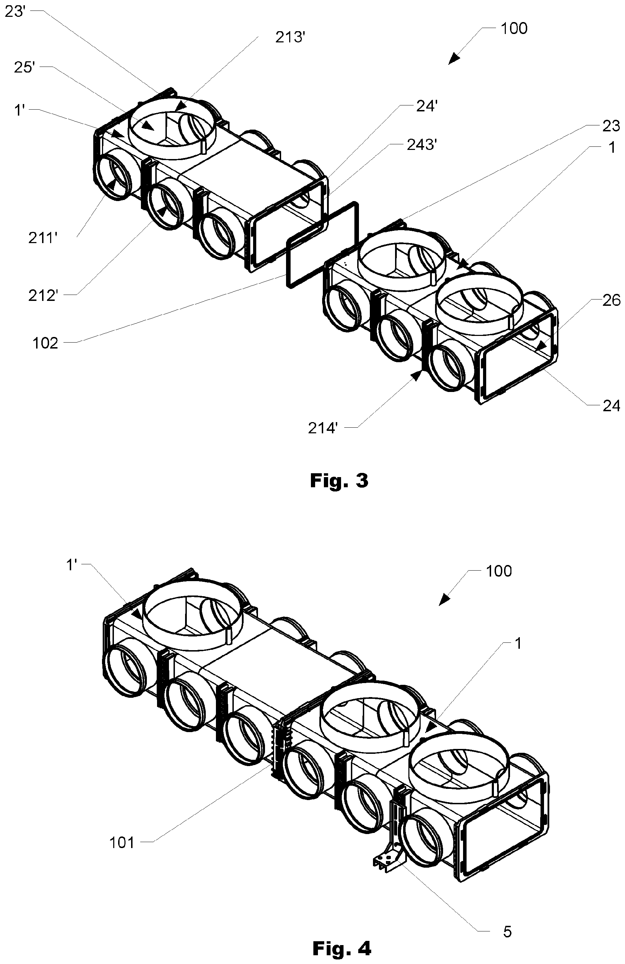

Fig. 3 shows an exploded view of an air distributor assembly 100 according to an embodiment of the invention, which comprises two air distributor units 1 and 1', each according to any of the embodiments as described herein. The two air distributor units 1 and 1' are adjacently connected, i.e. first end 23 of the first air distributor unit 1 is connected to second end 24' of the second air distributor unit 1'. Ascan be seen, sealing lip 102 is arranged between the two connected air distributor units 1 and 1'. In this particular embodiment, the air distributor assembly consists of two air distributor units. While air distributor unit 1' comprises seven lateral connector openings (only 21 1', 212' and 213' are references for clarity purposes), air distributor unit 1 comprises eight lateral connector openings (not referenced for reasons of clarity).

Fig. 4 shows the air distributor assembly 100 of Fig. 4 in the assembled state in a perspective view. As can be seen, the two air distributor units 1 and 1' are connected with each other via connecting element 101, which can be slided over the rear grips of the two units. Thus, upon arranging the units 1 and 1' adjacent to each other, the rear grips form together the male part of the form locking connection, which is fixed via form-locking by sliding connector element 101 over the two rear grips. Furthermore, the air distributor assembly 100 comprises foot 5 (for clarity reasons only a single foot is shown), which is mounted onto fastening structure 214' (see Fig. 3).

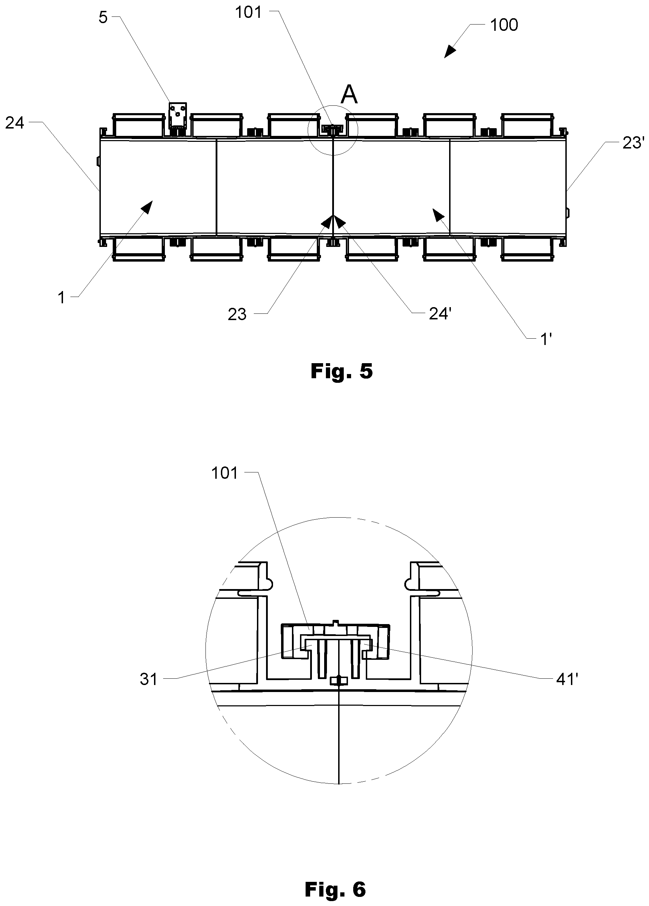

Fig. 5 shows a bottom view of the air distributor assembly of Fig. 5, which exemplifies how connector element 101 is slided over the two rear grips. Furthermore, it can be seen how first end 23 of first air distributor unit 1 and second end 24' of second air distributor unit 1' are directly adjacently connected with each other. In Fig. 6, an enlarged view of section A is shown, which shows rear grips 31 and 41' of the first air distributor unit 1, respectively of second air distributor unit 1'. By arranging the two units adjacently directly next to each other, the two flanges with the rear grips form together the male part of the form-locking connection, which allows for a rapid and easy assembly of the air unit assembly 100.

### List of reference signs

- 1, 1': Air distributor unit
- 100: Air distributor assembly
- 101: Connecting element
- 102: Sealing lip
- 2: Base body
- 21: Outer side wall
- 211, 212, 213: Lateral connector opening
- 214: Fastening structure
- 215: First inclination
- 216: Second inclination
- 22: Inner space
- 23: First end
- 24: Second end
- 241: Tooth
- 242: Depression
- 243: Groove
- 25: First opening
- 26: Second opening
- 3: First flange
- 4: Second flange
- 31,41: Folding edge
- 5: Foot
- 6: Constriction

## Claims

1. Air distributor unit (1) comprising
a. a tubular base body (2) having an outer side wall (21) encompassing an inner space (22), the tubular base body (2) being made from a polymeric material and extending in a longitudinal direction of the air distributor unit between a first end (23) and a second end (24), and comprising at the first end a first opening (25) and at the second end a second opening (26), wherein the tubular base body (2) is injection-molded and configured as a single-piece tubular base body;
b. wherein the cross-sectional open area of the first opening (25) and the cross-sectional open area of the second opening (26) are each larger than the inner cross-sectional area of the outer side wall (21) of the tubular base-body (2) between the first end (23) and the second end (24) of the tubular base body;
**characterized in that** the tubular base body (2) comprises a first flange (3) around the first opening (25) and a second flange (4) around the second opening (26).

2. The air distributor unit (1) according to claim 1, wherein the outer side wall (21) comprises at least one lateral connector opening (211, 212, 213) into the inner space (22).

3. The air distributor unit (1) according to claim 1 or 2, wherein the outer side wall (21) comprises an exchangeable wall section, which preferably comprises a lateral connector opening (211, 212, 213) into the inner space (22).

4. The air distributor unit (1) according to claim 2 or 3, wherein the outer side wall (21) comprises a plurality of wall planes encompassing the inner space and being angled towards each other and wherein the outer side wall comprises at least two lateral connector openings (211, 212, 213) within different wall planes and/or within the same wall plane.

5. The air distributor unit (1) according to any of the previous claims, wherein the first flange (3) and the second flange (4) each comprise at least one folding edge (31, 41) defining a rear grip.

6. The air distributor unit (1) according to any of the previous claims, wherein the tubular base body (2) comprises at the first end (23) and at the second end (24) of its front sides protruding teeth (241) and depressions (242) for accommodating a tooth; and/or wherein the tubular base body (2) comprises at each of the first end (23) and the second end (24) of its front sides a groove (243) being circumferentially arranged around the first opening (25) or the second opening (26) and being configured for accommodating a sealing lip.

7. The air distributor unit (1) according to any of the previous claims, further comprising a male connector structure being circumferentially arranged around the first opening (25) and a female connector structure being circumferentially arranged around the second opening (26).

8. The air distributor unit (1) according to any of the previous claims, wherein the outer side wall (21) comprises at least one fastening structure (214) for fastening at least one supporting leg, wherein preferably the fastening structure (214) is configured for establishing a snap-fit or latching connection with the at least one supporting leg.

9. The air distributor unit (1) according to claim 8, wherein the fastening structure (214) is configured such that the at least one supporting leg can be fastened on a plurality of different levels.

10. The air distributor unit (1) according to any of the previous claims, wherein the air distributor unit (1) further comprises a plurality of feet (5) protruding from the tubular base body (2), wherein preferably each of the feet (5) is extendable.

11. The air distributor unit (1) according to any of the previous claims, wherein the outer side wall (21) comprises a first inclination (215), in particular a first linear inclination, extending from the first opening (23) towards a constriction (6), and a second inclination (216), in particular a second linear inclination, extending from the second opening (26) towards the constriction (6), wherein the constriction (6) is arranged between the first opening (25) and the second opening (26).

12. The air distributor unit (1) according to claim 11, wherein the first linear inclination (215) and the second linear inclination (216) each comprises an inclination angle with respect to the longitudinal direction of 0.5° to 6°, particularly from 1° to 5°.

13. Kit of parts comprising at least two air distributor units (1, 1') each according to any of the previous claims, one or more sealing lips (102) configured for providing a seal between two adjacently connected air distributor units (1, 1'), and optionally a plurality of connecting elements (101), wherein preferably the connecting elements (101) are configured for connecting two adjacent air distributor units (1, 1') via a form-locking connection; wherein preferably the kit further comprises a plurality of supporting legs and/or feet (5) preferably being configured to be fastened to the at least one fastening structure (214).

14. An air distributor assembly (100) comprising at least two adjacently connected air distributor units (1, 1') each according to any of claims 1 to 12, wherein the first opening of one of the air distributor units (1) is connected with the second opening of the other air distributor unit (1'), wherein a sealing lip is arranged between the two connected air distributor units (1, 1'), wherein preferably the two air distributor units (1, 1') are connected by at least on connecting element (101), preferably via a form-locking connection.

## Patentansprüche

1. Luftverteilereinheit (1), umfassend
a. einen rohrförmigen Grundkörper (2) mit einer einen Innenraum (22) umschließenden äußeren Seitenwand (21), wobei der rohrförmige Grundkörper (2) aus einem Polymermaterial hergestellt ist und sich in Längsrichtung der Luftverteilereinheit zwischen einem ersten Ende (23) und einem zweiten Ende (24) erstreckt, und am ersten Ende eine erste Öffnung (25) und am zweiten Ende eine zweite Öffnung (26) umfasst, wobei der rohrförmige Grundkörper (2) spritzgegossen und als einteiliger rohrförmiger Grundkörper ausgebildet ist;
b. wobei die offene Querschnittsfläche der ersten Öffnung (25) und die offene Querschnittsfläche der zweiten Öffnung (26) jeweils größer ist als die innere Querschnittsfläche der äußeren Seitenwand (21) des rohrförmigen Grundkörpers (2) zwischen dem ersten Ende (23) und dem zweiten Ende (24) des rohrförmigen Grundkörpers, **dadurch gekennzeichnet, dass** der rohrförmige Grundkörper (2) einen ersten Flansch (3) um die erste Öffnung (25) und einen zweiten Flansch (4) um die zweite Öffnung (26) umfasst.

2. Die Luftverteilereinheit (1) nach Anspruch 1, wobei die äußere Seitenwand (21) mindestens eine laterale Anschlussöffnung (211, 212, 213) in den Innenraum (22) umfasst.

3. Die Luftverteilereinheit (1) nach Anspruch 1 oder 2, wobei die äußere Seitenwand (21) einen austauschbaren Wandabschnitt umfasst, der vorzugsweise eine laterale Anschlussöffnung (211, 212, 213) in den Innenraum (22) umfasst.

4. Die Luftverteilereinheit (1) nach Anspruch 2 oder 3, wobei die äußere Seitenwand (21) eine Vielzahl von Wandebenen umfasst, die den Innenraum umschließen und zueinander abgewinkelt sind, und wobei die äußere Seitenwand mindestens zwei laterale Anschlussöffnungen (211, 212, 213) innerhalb unterschiedlicher Wandebenen und/oder innerhalb der gleichen Wandebene umfasst.

5. Die Luftverteilereinheit (1) nach einem der vorhergehenden Ansprüche, wobei der erste Flansch (3) und der zweite Flansch (4) jeweils mindestens eine Faltkante (31, 41) umfassen, die einen Hinterschnitt definiert.

6. Die Luftverteilereinheit (1) nach einem der vorhergehenden Ansprüche, wobei der rohrförmige Grundkörper (2) am ersten Ende (23) und am zweiten Ende (24) seiner Stirnseiten vorstehende Zähne (241) und Vertiefungen (242) zur Aufnahme eines Zahns umfasst; und/oder wobei der rohrförmige Grundkörper (2) am ersten Ende (23) und am zweiten Ende (24) seiner Stirnseiten jeweils eine Nut (243) umfasst, die umlaufend um die erste Öffnung (25) oder die zweite Öffnung (26) angeordnet ist und zur Aufnahme einer Dichtlippe ausgebildet ist.

7. Die Luftverteilereinheit (1) nach einem der vorhergehenden Ansprüche, ferner umfassend eine männliche Verbindungsstruktur, die umlaufend um die erste Öffnung (25) angeordnet ist, und eine weibliche Verbindungsstruktur, die umlaufend um die zweite Öffnung (26) angeordnet ist.

8. Die Luftverteilereinheit (1) nach einem der vorhergehenden Ansprüche, wobei die äußere Seitenwand (21) mindestens eine Befestigungsstruktur (214) zur Befestigung mindestens eines Stützbein umfasst, wobei vorzugsweise die Befestigungsstruktur (214) zur Herstellung einer Schnapp- oder Rastverbindung mit dem mindestens einen Stützbein ausgebildet ist.

9. Die Luftverteilereinheit (1) nach Anspruch 8, wobei die Befestigungsstruktur (214) so ausgebildet ist, dass das mindestens eine Stützbein auf einer Vielzahl von unterschiedlichen Stufen befestigt werden kann.

10. Die Luftverteilereinheit (1) nach einem der vorhergehenden Ansprüche, wobei die Luftverteilereinheit (1) ferner eine Vielzahl von Füßen (5) umfasst, die aus dem rohrförmigen Grundkörper (2) herausragen, wobei vorzugsweise jeder der Füße (5) ausziehbar ist.

11. Die Luftverteilereinheit (1) nach einem der vorhergehenden Ansprüche, wobei die äußere Seitenwand (21) eine erste Neigung (215), insbesondere eine erste lineare Neigung, umfasst, die sich von der ersten Öffnung (23) zu einer Engstelle (6) erstreckt, und eine zweite Neigung (216), insbesondere eine zweite lineare Neigung, die sich von der zweiten Öffnung (26) zu der Engstelle (6) erstreckt, wobei die Engstelle (6) zwischen der ersten Öffnung (25) und der zweiten Öffnung (26) angeordnet ist.

12. Die Luftverteilereinheit (1) nach Anspruch 11, wobei die erste lineare Neigung (215) und die zweite lineare Neigung (216) jeweils einen Neigungswinkel bezüglich der Längsrichtung von 0,5° bis 6°, insbesondere von 1 ° bis 5°, umfassen.

13. Bausatz umfassend mindestens zwei Luftverteilereinheiten (1, 1') jeweils nach einem der vorhergehenden Ansprüche, eine oder mehrere Dichtlippen (102), die zur Abdichtung zwischen zwei benachbart verbundenen Luftverteilereinheiten (1, 1') ausgebildet sind, und optional eine Vielzahl von Verbindungselementen (101), wobei vorzugsweise die Verbindungselemente (101) zur Verbindung zweier benachbarter Luftverteilereinheiten (1, 1') über eine formschlüssige Verbindung ausgebildet sind; wobei vorzugsweise der Bausatz ferner eine Vielzahl von Stützbeinen und/oder Füßen (5) umfasst, die vorzugsweise so konfiguriert sind, dass sie an der mindestens einen Befestigungsstruktur (214) befestigt werden können.

14. Eine Luftverteilerbaugruppe (100) umfassend mindestens zwei benachbart verbundene Luftverteilereinheiten (1, 1') nach einem der Ansprüche 1 bis 12, wobei die erste Öffnung der einen Luftverteilereinheit (1) mit der zweiten Öffnung der anderen Luftverteilereinheit (1') verbunden ist, wobei zwischen den beiden verbundenen Luftverteilereinheiten (1, 1') eine Dichtlippe angeordnet ist, wobei vorzugsweise die beiden Luftverteilereinheiten (1, 1') durch mindestens ein Verbindungselement (101), vorzugsweise über eine formschlüssige Verbindung, verbunden sind.

## Revendications

1. Unité de distribution d'air (1) comprenant
a. un corps de base tubulaire (2) ayant une paroi latérale extérieure (21) englobant un espace intérieur (22), le corps de base tubulaire (2) étant fabriqué à partir d'un matériau polymère et s'étendant dans une direction longitudinale de l'unité de distribution d'air entre une première extrémité (23) et une seconde extrémité (24), et comprenant à la première extrémité une première ouverture (25) et à la seconde extrémité une seconde ouverture (26), le corps de base tubulaire (2) étant moulé par injection et configuré comme un corps de base tubulaire d'une seule pièce ;
b. en ce que la section ouverte de la première ouverture (25) et la section ouverte de la deuxième ouverture (26) sont chacune plus grande que la section intérieure de la paroi latérale extérieure (21) du corps de base tubulaire (2) entre la première extrémité (23) et la deuxième extrémité (24) du corps de base tubulaire, **caractérisé en ce que** le corps de base tubulaire (2) comprend une première bride (3) autour de la première ouverture (25) et une deuxième bride (4) autour de la deuxième ouverture (26) .

2. L'unité de distribution d'air (1) selon la revendication 1, dans laquelle la paroi latérale extérieure (21) comprend au moins une ouverture de connecteur latérale (211, 212, 213) dans l'espace intérieur (22).

3. L'unité de distribution d'air (1) selon la revendication 1 ou 2, dans laquelle la paroi latérale extérieure (21) comprend une section de paroi échangeable, qui comprend de préférence une ouverture de connecteur latérale (211, 212, 213) dans l'espace intérieur (22).

4. L'unité de distribution d'air (1) selon la revendication 2 ou 3, dans laquelle la paroi latérale extérieure (21) comprend une pluralité de plans de paroi englobant l'espace intérieur et étant inclinés l'un vers l'autre et dans laquelle la paroi latérale extérieure comprend au moins deux ouvertures de connecteur latérales (211, 212, 213) à l'intérieur de plans de paroi différents et/ou à l'intérieur du même plan de paroi.

5. L'unité de distribution d'air (1) selon l'une quelconque des revendications précédentes, dans laquelle la première bride (3) et la seconde bride (4) comprennent chacune au moins une arête de pliage (31, 41) définissant une prise arrière.

6. L'unité de distribution d'air (1) selon l'une quelconque des revendications précédentes, dans laquelle le corps de base tubulaire (2) comprend à la première extrémité (23) et à la seconde extrémité (24) de ses côtés avant des dents en saillie (241) et des dépressions (242) pour loger une dent ; et/ou dans lequel le corps de base tubulaire (2) comprend à la première extrémité (23) et à la deuxième extrémité (24) de ses côtés avant une rainure (243) disposée circonférentiellement autour de la première ouverture (25) ou de la deuxième ouverture (26) et configurée pour recevoir une lèvre d'étanchéité.

7. L'unité de distribution d'air (1) selon l'une quelconque des revendications précédentes, comprenant en outre une structure de connecteur mâle disposée circonférentiellement autour de la première ouverture (25) et une structure de connecteur femelle disposée circonférentiellement autour de la seconde ouverture (26).

8. L'unité de distribution d'air (1) selon l'une quelconque des revendications précédentes, dans laquelle la paroi latérale extérieure (21) comprend au moins une structure de fixation (214) pour fixer au moins une jambe de support, la structure de fixation (214) étant de préférence configurée pour établir une liaison par encliquetage ou par verrouillage avec la au moins une jambe de support.

9. L'unité de distribution d'air (1) selon la revendication 8, dans laquelle la structure de fixation (214) est configurée de manière à ce que la au moins une jambe de support puisse être fixée sur une pluralité de niveaux différents.

10. L'unité de distribution d'air (1) selon l'une quelconque des revendications précédentes, dans laquelle l'unité de distribution d'air (1) comprend en outre une pluralité de pieds (5) faisant saillie du corps de base tubulaire (2), dans laquelle de préférence chacun des pieds (5) est extensible.

11. L'unité de distribution d'air (1) selon l'une quelconque des revendications précédentes, dans laquelle la paroi latérale extérieure (21) comprend une première inclinaison (215), notamment une première inclinaison linéaire, s'étendant de la première ouverture (23) vers un étranglement (6), et une seconde inclinaison (216), notamment une seconde inclinaison linéaire, s'étendant de la seconde ouverture (26) vers l'étranglement (6), l'étranglement (6) étant disposé entre la première ouverture (25) et la seconde ouverture (26).

12. L'unité de distribution d'air (1) selon la revendication 11, dans laquelle la première inclinaison linéaire (215) et la deuxième inclinaison linéaire (216) comprennent chacune un angle d'inclinaison par rapport à la direction longitudinale de 0,5° à 6°, notamment de 1° à 5°.

13. Kit de pièces comprenant au moins deux unités de distribution d'air (1, 1') chacune selon l'une quelconque des revendications précédentes, une ou plusieurs lèvres d'étanchéité (102) configurées pour fournir une étanchéité entre deux unités de distribution d'air (1, 1') connectées de manière adjacente, et éventuellement une pluralité d'éléments de connexion (101), dans lequel de préférence les éléments de connexion (101) sont configurés pour connecter deux unités de distribution d'air adjacentes (1, 1') via une connexion par verrouillage de forme ; dans lequel, de préférence, le kit comprend en outre une pluralité de jambes et/ou de pieds de support (5) étant de préférence configurés pour être fixés à la au moins une structure de fixation (214).

14. Un ensemble de distribution d'air (100) comprenant au moins deux unités de distribution d'air (1, 1') reliées de manière adjacente, chacune selon l'une des revendications 1 à 12, dans lequel la première ouverture de l'une des unités de distribution d'air (1) est reliée à la seconde ouverture de l'autre unité de distribution d'air (1'), dans lequel une lèvre d'étanchéité est disposée entre les deux unités de distribution d'air reliées (1, 1'), dans lequel, de préférence, les deux unités de distribution d'air (1, 1') sont reliées par au moins un élément de connexion (101), de préférence par une connexion à verrouillage de forme.
